# EUROPEAN PATENT SPECIFICATION

(11) **EP 1 789 296 B1**
(45) Date of publication and mention of the grant of the patent: **29.06.2016**
(21) Application number: 05776263.5
(22) Date of filing: 02.09.2005
(51) Int. Cl.: B60T 17/18, B60T 13/68

(54) **TRAILER BRAKE SYSTEM**
ANHÄNGERBREMSSYSTEM
SYSTEME DE FREINAGE DE REMORQUE

(30) Priority: 03.09.2004 GB 0419603
(43) Date of publication of application: 30.05.2007
(73) Proprietor: Knorr-Bremse Systems for Commercial Vehicles Limited, Bristol BS16 7FE (GB)
(72) Inventor: ROSS, Colin Ford, Century House, Folly Brook Road, Bristol BS16 7FE (GB)
(74) Representative: Moore, David Simon
(86) International application number: PCT/GB2005/003394
(87) International publication number: WO 2006/024864

(56) References cited:
- DE-A1- 4 327 759
- GB-A- 2 310 695
- US-A- 4 697 852

## Description

The present invention relates to a trailer brake system for the trailer of a commercial vehicle tractor/trailer.

Modem braking systems for tractor/trailer units are invariably fluid-operated, the fluid typically being air, for economic and practical reasons. A pressurised air supply is generated by an engine-driven compressor on the tractor which supplies air to the trailer through a supply line, so that when the service brake is applied by the driver, the brakes on the tractor and the trailer are applied by the supply of compressed air to the individual wheel brakes. It is also known to have a spring-applied brake system in which the braking force is generated by a spring in a spring actuator, which is biased in a direction to apply the brake. In normal operation, the brake is held in the off position by the application of compressed air acting counter to the braking force of the spring. In an emergency, if the compressed air supply is lost, the spring actuator automatically applies the brake on the trailer to bring the trailer to a standstill.

It is a standard arrangement for the trailer to include a pressurised air reservoir charged with air supplied through the supply line by the compressor on the tractor. A non-return valve is mounted on the trailer to prevent compressed air in the reservoir from flowing back into the supply line. Thus, in an emergency, if the supply of air from the tractor is cut off, a control valve is moved to an emergency brake position in which compressed air from the reservoir is applied to the brakes on the trailer to bring the trailer to a standstill.

It is also known for such trailers to have a parking brake in which the braking force is supplied by a spring actuator, the brake being normally held off by an air supply. The control valve for the parking brake is operable manually to vent the valve to atmosphere and hence apply the parking brake. In use, when parking a trailer, the driver has to decouple the supply line connection between the tractor and trailer and also an electrical connection through which electrical components on the trailer are connected to the tractor electrical supply. The correct procedure at this stage is that the driver should manually operate the parking brake valve to ensure that the parking brake is applied. The driver can then uncouple the pivotal connection between the tractor and trailer to enable the tractor to be driven away leaving the trailer in the parked condition.

It will be apparent from the earlier description that when the supply line is decoupled from the trailer, the trailer brakes are automatically applied by the compressed air contained in the reservoir on the trailer. As in this condition, which equates to the emergency braking mode, there is an open connection between the reservoir and the brakes, the brakes are held on and the trailer held stationary, that is braked, by these means.

The unintended consequence of this is that drivers often rely on the braking achieved in this way when parking a trailer and, either through laziness, inadvertence or a reluctance to get dirty, because the valves are often situated in an exposed, low down, position on the trailer, they do not operate the manual valve to apply the park brake. This can have dangerous consequences which have led to fatalities.

The brakes are held on in this "emergency mode", and the trailer held stationary, by the compressed air in the system but, inevitably, there is a slight leakage of air in the system, with the result that the air gradually leaks out until the brakes are no longer held on, so that the trailer can roll away. A further dangerous situation can arise when a driver re-couples a tractor to a trailer which has been parked in this way. As soon as the driver couples the supply line to the trailer, the valve arrangement on the trailer is reset to cancel the emergency braking mode, with the result that the trailer is no longer braked and can either roll away backwards, breaking the supply line, or can roll forwards with the risk of crushing the driver between the trailer and the tractor cab. Furthermore, if the driver has left the tractor, without putting on the tractor parking brake, as soon as the supply line is connected the emergency brake is released and the whole tractor/trailer can roll away.

GB 2 310 695 A discloses a brake system for vehicle trailer in which the brake line to the park brake actuator is automatically vented when the red line is disconnected so there is no possibility of the driver being trapped between the tractor and trailer as the driver is out of the danger area when operating the red button.

The present invention seeks to provide a solution to these disadvantages of the known parking brake.

According to the present invention there is provided a brake system for a trailer including a fluid pressure operable service brake system and a parking brake having a spring actuator operable to provide a braking force to the parking brake, fluid pressure being supplied to said actuator through a parking valve to hold the parking brake in the off position when the parking valve is in a first condition, removal of said fluid pressure causing the parking brake to be applied, the parking valve, after the parking brake has been applied by removal of said fluid pressure from the spring actuator, being moved to a second condition in which fluid pressure is prevented from being applied to said spring actuator to release the parking brake, until the valve is reset to said first condition in an operation separate from the supply of said fluid pressure.

Preferably, wherein the valve is reset manually. In a preferred embodiment, said fluid pressure is derived selectively from a pressurised fluid reservoir on the trailer or a supply from an associated tractor coupled to said trailer.

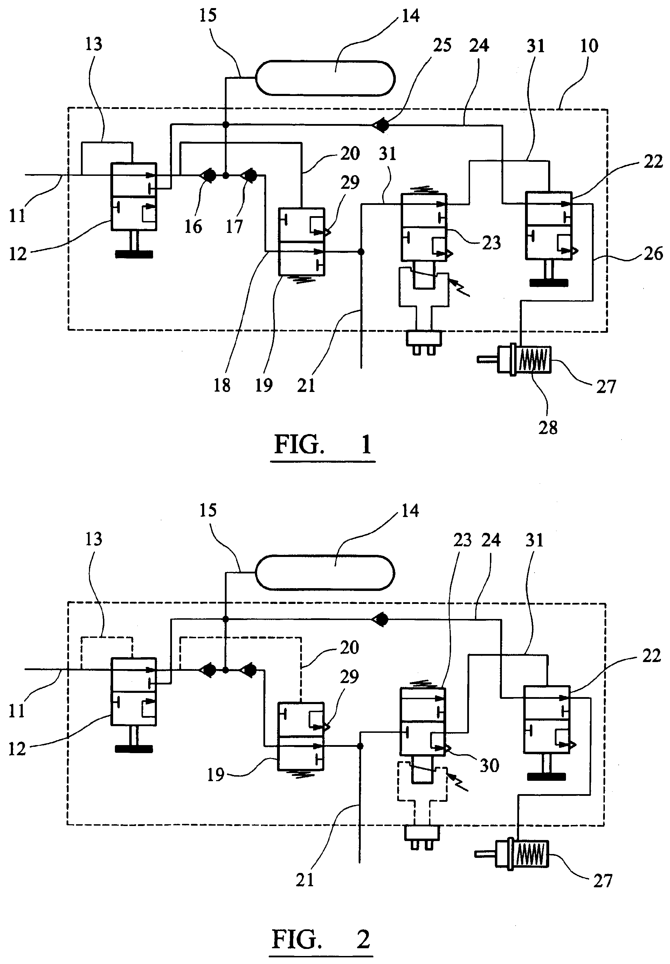

A preferred embodiment of the present invention will now be described by way of example with reference to the accompanying drawings, in which:-
Figures 1 to 8 show a schematic layout of a trailer braking control valve system in its various modes of operation.

Referring now to Figure 1, there is shown in schematic form, in outline, a brake control valve 10 for the braking system of a trailer of a tractor/trailer commercial vehicle unit (not shown). The control valve 10 is connected to an air supply derived from the tractor through a main supply line 11. A non return valve 12 responsive to the pressure in the supply line through a control line 13 is provided to isolate the braking system on the trailer should the pressure in the supply line 11 fall below a predetermined value. In the normal operating position, the non return valve 12 is held by the pressure in the supply line 11 to provide a fluid path for the supply of compressed air to the trailer braking system.

A compressed air reservoir 14 is located on the trailer and is charged with air from the main supply line 11 via a reservoir line 15 which is connected to a pressure supply line 18 at a point between two non return check valves 16, 17 located downstream of the non return valve 12. The two check valves 16, 17 are arranged to permit fluid to flow from the main supply line 11 towards the brakes on the trailer but to block flow in the reverse direction. The pressure supply line 11 leads to a further two-way control valve 19 responsive via a control line 20 to the pressure in the pressure supply line 18 between the first check valve 16 and the non return valve 12. An output line 21 from the control valve 19 leads to the service brakes (not shown).

The air pressure in the output line 21 is supplied through a control line 31 to provide a control pressure on a manually operable park brake control valve 22. A solenoid-operated check valve 23 is located in the control line 31. When the trailer is coupled to the electrical supply line to the tractor , the solenoid-operated check valve 23 is energised, in which condition, a connection from the valve to the service line 21 is closed and the control line 31 for the park brake control valve 22 is vented through an outlet 30 of the solenoid valve 23 as shown in Figure 2.

The park brake control valve 22 is connected to the main supply line 11 and to the reservoir line 15 through a supply line 24 containing a non return check valve 25 which acts to allow pressurised air to flow from the supply line 11 and reservoir 14 towards the park brake control valve 22 but blocks flow of air in the reverse direction. An output line 26 from the park brake control valve 22 leads to a spring actuator braking system consisting of one or more spring-applied brakes shown schematically as reference 27. The braking force for the spring applied brake is derived from a spring actuator 28 which is biased in a brake-applied direction, the brake being held in the off position by air pressure applied to the brake through output line 26 counter to the force of the spring actuator 28.

Referring now to Figure 2, the valve unit is shown in the condition for initial charging. In this condition, the main supply line 11 is charged with air under pressure and this pressure is fed through the control line 13 to hold the non return valve 12 in the position in which pressurised air is supplied through line 15 to the reservoir 14 and through the two-way valve 19 to the service brake line 21. As shown, the park valve 22 is in the position in which pressurised air is supplied through the line 24 and line 26 to hold the spring applied park brake in the off position.

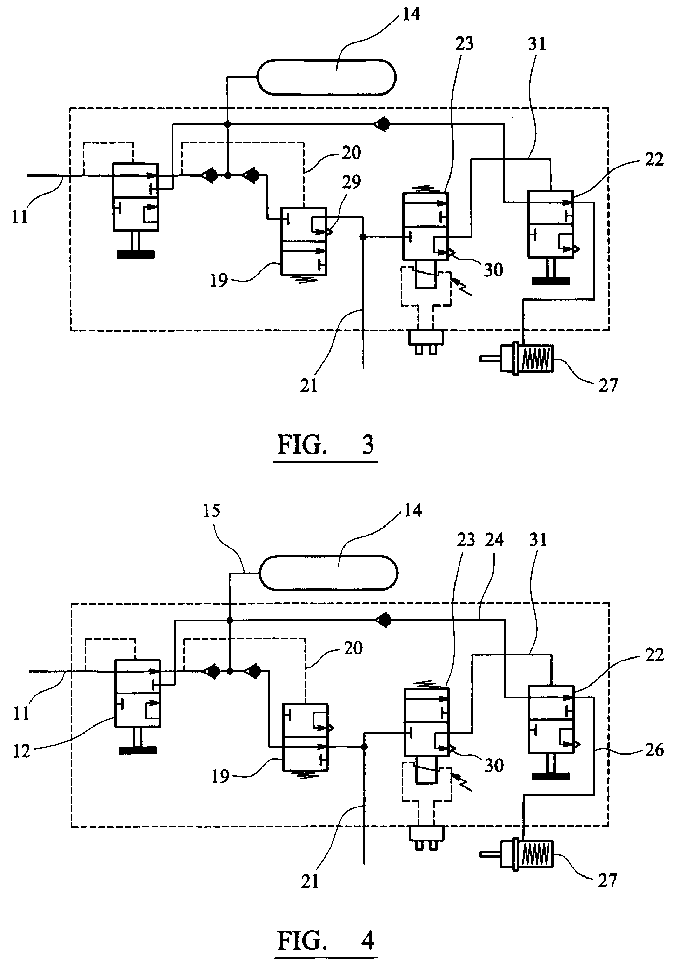

When the pressure in the reservoir 14 reaches a predetermined value, typically in excess of 3.0 bar, the valve 19 is urged to a position to enable the service line 21 to vent through a valve outlet 29. On reducing the reservoir pressure, at a value below 3.0 bar, the valve 22 switches to the position shown in Figure 3. In this condition, a pressure from the service line 11 is supplied through the line 24 to the park brake control valve 22 and through line 26 to hold the spring-applied brake 27 in the off position. The supply line 11 is also connected to the reservoir 14 through the line 15.

Figure 4 illustrates the condition of the valve 10 in the event of a loss of air pressure in the supply line 11, but with the electrical supply still connected to the solenoid valve 23. In these circumstances, the non return valve 12 remains in the same condition but the valve 19 is switched because of the absence of pressure in the control line 20. In this condition pressurised air can flow from the reservoir 14 through the line 15, check valve 17 and through the valve 19 to the service line 21, to apply the service brakes in an emergency mode. The service brakes will remain in the braking position until air pressure in the reservoir 14 is exhausted. The park brake control valve 22 remains connected to the air supply in the reservoir 14 to hold the spring applied parking brake 27 in the off position. When air pressure in the reservoir 14 is exhausted, the spring applied park brake 27 will automatically be applied to retain the trailer in the braked condition.

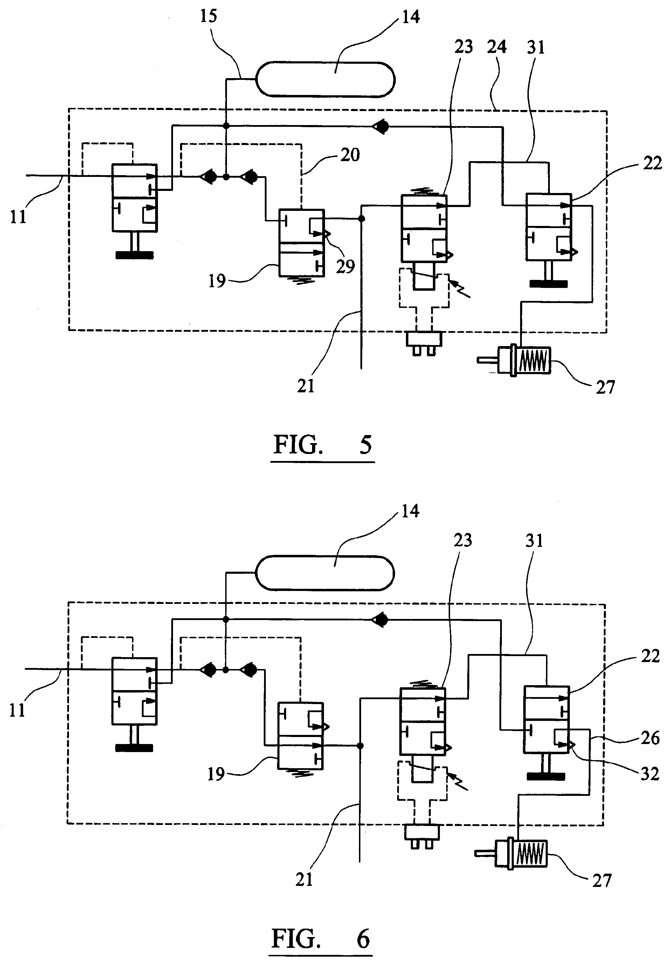

Figure 5 illustrates an arrangement in which the supply line 11 remains connected but the electrical connection between the tractor and trailer fails. In this situation, air pressure from the supply line 11 is supplied through the control line 20 to hold the valve 19 in the position where the line 21 leading to the service brake is vented through the outlet 29. The failure of the electrical connection results in the solenoid valve 23 switching to the position where the control line 31 leading to the park brake 22 is vented through the service line 21 and the outlet 29. Air pressure is still supplied to the park brake 22 through the line 24 and hence to the spring applied brake 27 to hold the spring applied brake in the off position.

Figure 6 illustrates the arrangement when the trailer is disconnected from the tractor. In this situation, the air pressure in the supply line 11 is zero and the solenoid valve 23 is de-energised so that it moves to the position where the control line 31 of the park brake 22 is connected to the service brake line 21. Since the supply line 11 pressure is zero, the pressure in the control line 20 of the valve 19 is removed which results in the valve switching to a position in which air pressure from the reservoir 14 is supplied through line 15, check valve 17 and line 18, through the valve 19 to the service line 21.

This pressure is also supplied through the solenoid valve 23 and the control line 31 to the park valve 22 causes the park valve to be set to the park position where the spring actuator is vented through an outlet 32 of the valve 22, thereby causing the spring applied brakes to be moved to the on position. In the event of loss of reservoir pressure, pressure would be removed from the control line 31 causing the valve 22 to switch to provide a direct connection between the line 24 from the reservoir 14 to the line 26 leading to the brake 27 so that the absence of pressure in the reservoir 14 causes the spring applied brake to be moved to the on position. In all cases, the trailer is always braked.

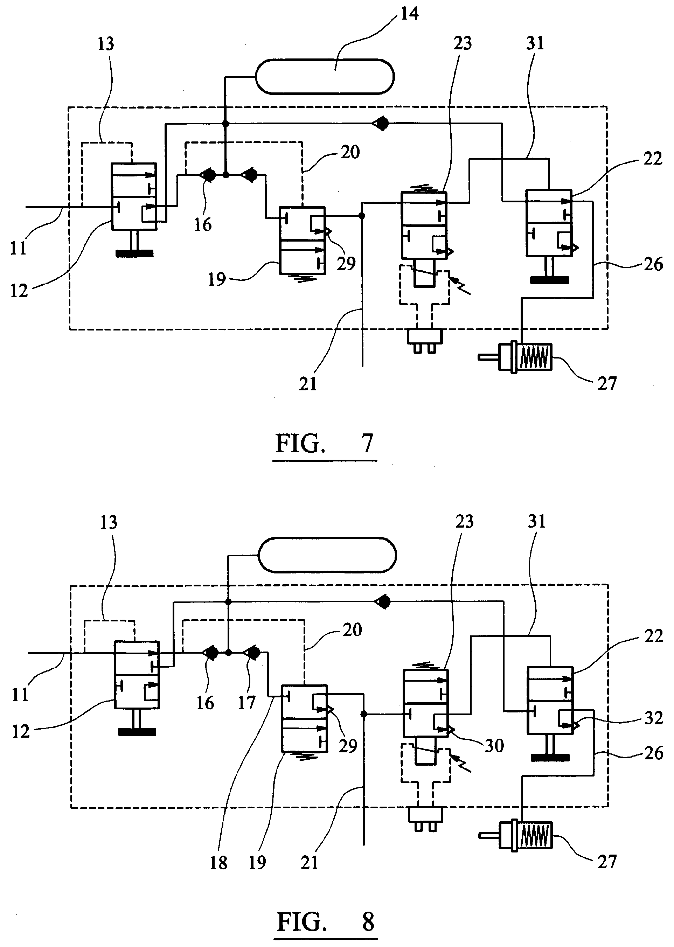

In certain situations, it is desirable to be able to move a trailer without a supply line or electrical supply being available. To achieve this, it is necessary for the reservoir to be charged with air to hold the spring applied brake off. Figure 7 illustrates the condition of the valve in these circumstances. With no pressure in the supply line 11 and hence the control line 13 of the non return valve 12, it is possible to move the valve 12 manually to a position in which air pressure from the reservoir 14 is supplied through the valve 12 and via the non return check valve 16 and therefore through the control line 20 to the valve 19. This causes the valve 19 to be switched to a position in which the service line 21 is vented to atmosphere through the outlet 29. This in turn removes the pressure from the control line 31 controlling the park valve 22 which is also vented through the outlet 29 via the solenoid valve 23, to enable the park valve to be moved manually to apply air pressure from the reservoir 14 to the spring actuator 27 to move the spring applied brake to the off position. In this condition, the trailer is not braked and can be moved.

Figure 8 illustrates the situation where the trailer is re-connected to a tractor. When air pressure is again applied to the supply line 11 this pressure is applied to the non return valve 12 via its control line 13 to move the valve to the position where supply line pressure is supplied to the valve 19 via the check valves 16, 17 and line 18 and hence through control line 20, to move the valve 19 to the position where the service brake line 21 is vented through the outlet 29. The solenoid valve 23 is energised when the electrical supply is reconnected which vents the control line 31 of the park valve 22 through the outlet 30 of the solenoid valve. This causes the park valve 22 to remain in the position where the spring applied brake is vented through the line 26 and the outlet 32, ensuring that the trailer remains braked. Thus, the trailer remains braked as the park valve 22 has been automatically set to this park position so that the trailer cannot be moved until the driver manually releases the park valve 22.

## Claims

1. A brake system for a trailer including a fluid pressure operable service brake system, a parking brake (27) having a spring actuator (28) operable to provide a braking force to the parking brake (27) and an electrical connection to energise a solenoid valve (23), fluid pressure being supplied to said actuator (28) through a parking valve (22) to hold the parking brake (27) in the off position when the parking valve (22) is in a first condition, removal of said fluid pressure causing the parking brake (27) to be applied, **characterised by** the park valve (22) being moved to a second condition by removal of said fluid pressure from the spring actuator (28) and de-energisation of the solenoid valve, resulting in the parking brake (27) being applied, in which second condition fluid pressure is prevented from being reapplied to said spring actuator (28) to release the parking brake (27), until the valve (22) is reset to said first condition in an operation separate from the supply of said fluid pressure.

2. A brake system for a trailer according to claim 1, wherein the valve (22) is reset manually.

3. A brake system for a trailer according to claim 1 or 2, wherein said fluid pressure is derived selectively from a pressurised fluid reservoir (14) on the trailer or a supply from an associated tractor coupled to said trailer.

4. A brake system for a trailer according to any one of claims 1 to 3, wherein when the solenoid valve (23) is de-energised, pressure is supplied from the reservoir (14) via the solenoid valve (23) to the park valve (22) thereby causing the spring brake (27) to be moved to the on position.

5. A brake system according to Claim 4, wherein in the event of the loss of pressure from the reservoir (14), the park valve (22) switches to provide a direct connection between the reservoir (14) and the spring brake (27) thereby ensuring the spring brake (27) is moved to the on position.

6. A brake system according to any one of Claims 2 to 5, wherein a non return valve (12) responsive to pressure from a tractor supply line is provided, which valve is moveable manually to a position in which air pressure from the reservoir (14) is supplied through the non return valve (12) to a control valve (19), which valve (19) is adapted to remove the pressure from a control line (31) controlling the park valve (22) so that the park valve (22) can be moved manually to apply air pressure from the reservoir (14) to the parking brake (27) to move the brake to the off position.

7. A brake system according to Claim 6, wherein when the solenoid valve (23) is energised and air pressure applied to the supply line (11), the control valve (19) moves to a position venting the pressure to the solenoid valve (23) thereby causing the park valve (22) to move to a position where the spring brake (27) is vented via an outlet (32) of the park valve (22) thereby ensuring the trailer remains braked.

## Patentansprüche

1. Bremssystem für einen Anhänger umfassend ein mit Flüssigkeitsdruck betriebenes Betriebsbremssystem, eine Parkbremse (27) mit einem Federantrieb (28), der in der Lage ist, an der Parkbremse (27) eine Bremskraft herzustellen, und eine elektrische Verbindung zur Erregung eines Magnetventils (23), wobei der Flüssigkeitsdruck dem Antrieb (28) durch ein Parkbremsventil (22) zugeführt wird, so dass die Parkbremse (27) bei einem ersten Zustand des Parkbremsventils (22) in der Aus-Position gehalten und die Beseitigung des Flüssigkeitsdrucks zur Betätigung der Parkbremse (27) führt, **dadurch gekennzeichnet, dass** das Parkbremsventil (22) durch die Beseitigung des Flüssigkeitsdrucks vom Federantrieb (28) und die Entregung des Magnetventils in einen zweiten Zustand bewegt wird, der dazu führt, dass die Parkbremse (27) betätigt wird, wobei in diesem zweiten Zustand verhindert wird, dass dem Federantrieb (28) erneut Flüssigkeitsdruck zur Lösung der Parkbremse (27) zugeführt wird, bis das Ventil (22) in einem von der Zufuhr des Flüssigkeitsdrucks separaten Vorgang in den ersten Zustand zurückgesetzt wird.

2. Bremssystem für einen Anhänger nach Anspruch 1, wobei das Ventil (22) manuell zurückgesetzt wird.

3. Bremssystem für einen Anhänger nach Anspruch 1 oder 2, wobei der Flüssigkeitsdruck wahlweise von einem unter Druck stehenden Flüssigkeitsbehälter (14) am Anhänger oder aus einer Zufuhr von einem zugehörigen, mit dem Anhänger gekoppelten Zugfahrzeug kommt.

4. Bremssystem für einen Anhänger nach einem der Ansprüche 1 bis 3, wobei bei Entregung des Magnetventils (23) Druck vom Flüssigkeitsbehälter (14) über das Magnetventil (23) zum Parkbremsventil (22) zugeführt wird, wodurch die Federbremse (27) in die Ein-Position bewegt wird.

5. Bremssystem für einen Anhänger nach Anspruch 4, wobei im Falle eines Verlusts von Druck aus dem Flüssigkeitsbehälter (14) das Parkbremsventil (22) so umschaltet, dass eine direkte Verbindung zwischen dem Flüssigkeitsbehälter (14) und der Federbremse (27) hergestellt wird, wodurch sichergestellt wird, dass die Federbremse (27) in die Ein-Position bewegt wird.

6. Bremssystem für einen Anhänger nach einem der Ansprüche 2 bis 5 mit einem Rückschlagventil (12), das auf Druck aus einer Zugfahrzeug-Zufuhrleitung reagiert, wobei das Ventil manuell in eine Position bewegt werden kann, in der der Luftdruck vom Flüssigkeitsbehälter (14) durch das Rückschlagventil (12) zu einem Regelventil (19) geleitet wird und das Regelventil (19) so ausgelegt ist, dass es den Druck von einer das Parkbremsventil (22) steuernden Steuerleitung (31) entfernt, so dass das Parkbremsventil (22) manuell bewegt werden kann, um Luftdruck vom Flüssigkeitsbehälter (14) zur Parkbremse (27) zu führen, um die Bremse in die Aus-Position zu bewegen.

7. Bremssystem für einen Anhänger nach Anspruch 6, wobei sich bei Erregung des Magnetventils (23) und Zufuhr von Luftdruck zur Zufuhrleitung (11) das Regelventil (19) in eine Position bewegt, in der der Druck zum Magnetventil (23) entlüftet wird, wodurch sich das Parkbremsventil (22) in eine Position bewegt, in der die Federbremse (27) über einen Auslass (32) des Parkbremsventils (22) entlüftet wird, so dass eine fortgesetzte Bremsung des Anhängers gewährleistet ist.

## Revendications

1. Système de frein pour une remorque comprenant un système de frein de service hydraulique, un frein de stationnement (27) ayant un actionneur à ressort (28) ayant pour fonction de fournir une force de freinage au frein de stationnement (27) et un raccord électrique pour alimenter une électrovanne (23), la pression fluidique étant fournie audit actionneur (28) par l'intermédiaire d'une soupape (22) de frein stationnement pour maintenir le frein de stationnement (27) dans la position d'arrêt lorsque la soupape (22) de frein de stationnement se trouve dans une première condition, la suppression de ladite pression fluidique amenant le frein de stationnement (27) à se serrer, **caractérisé par** la soupape (22) de frein de stationnement étant déplacée dans une seconde condition par la suppression de ladite pression fluidique provenant de l'actionneur à ressort (28) et à couper l'alimentation de l'électrovanne, ce qui permet de serrer le frein de stationnement (27) dans lequel la pression fluidique de la seconde condition est empêchée d'être de nouveau appliquée audit actionneur à ressort (28) pour relâcher le frein de stationnement (27), jusqu'à ce que la soupape (22) soit réinitialisée dans ladite première condition dans un fonctionnement séparé de l'alimentation en ladite pression fluidique.

2. Système de frein pour une remorque selon la revendication 1, la soupape (22) est réinitialisée manuellement.

3. Système de frein pour une remorque selon la revendication 1 ou la revendication 2, ladite pression fluidique est extraite sélectivement d'un réservoir (14) de fluide sous pression sur la remorque ou dans une alimentation provenant d'un tracteur associé accouplé à ladite remorque.

4. Système de frein pour une remorque selon l'une quelconque des revendications 1 à 3, lorsque l'électrovanne (23) n'est plus alimentée, la pression provient du réservoir (14) par l'intermédiaire de l'électrovanne (23) et alimente la soupape de stationnement (22) amenant le frein à ressort (27) à se déplacer dans la position de marche.

5. Système de frein selon la revendication 4, en cas de perte de pression provenant du réservoir (14) la soupape (22) de frein de stationnement commute pour fournir un raccordement direct entre le réservoir (14) et le frein à ressort (27) assurant ainsi le déplacement du frein à ressort (27) dans la position de marche.

6. Système de frein selon l'une quelconque des revendications 2 à 5, un clapet de non-retour (12) est prévu en réponse à la pression provenant de la conduite d'alimentation du tracteur, ledit clapet peut être déplacé manuellement dans une position dans laquelle la pression de l'air provenant du réservoir (14) est fournie par l'intermédiaire du clapet de non-retour (12) à une soupape de commande (19), ladite soupape (19) est conçue pour supprimer la pression provenant d'une conduite de commande (31) commandant la soupape de stationnement (22) pour que la soupape de stationnement (22) puisse être déplacée manuellement pour appliquer une pression d'air provenant du réservoir (14) au frein de stationnement (27) pour déplacer le frein dans la position d'arrêt.

7. Système de frein selon la revendication 6, lorsque l'électrovanne (23) est alimentée et que la pression d'air est appliquée sur la conduite d'alimentation (11), la soupape de commande (19) se déplace dans une position mettant à l'air libre la pression sur l'électrovanne (23) amenant la soupape (22) de frein de stationnement à se déplacer dans une position où le frein à ressort (27) est mis à l'air libre par l'intermédiaire d'un orifice de sortie (32) de la soupape de stationnement (22) assurant ainsi le freinage continu de la remorque.
